# EUROPÄISCHE PATENTSCHRIFT

(11) **EP 3 778 029 B1**
(45) Veröffentlichungstag und Bekanntmachung des Hinweises auf die Patenterteilung: **04.05.2022**
(21) Anmeldenummer: 20189375.7
(22) Anmeldetag: 04.08.2020
(51) Int. Cl.: B02C 2/00, B02C 2/04, B02C 2/10, B02C 19/00, G07F 7/06

(54) **BRECHWERK, LEERGUTRÜCKNAHMEAUTOMAT UND VERFAHREN**
CRUSHER, MACHINE FOR RETURNING EMPTIES AND METHOD
BROYEUR, APPAREIL AUTOMATIQUE DE REPRISE DE PRODUITS CONSIGNÉS ET PROCÉDÉ

(30) Priorität: 13.08.2019 DE 102019121782
(43) Veröffentlichungstag der Anmeldung: 17.02.2021
(73) Patentinhaber: Wincor Nixdorf International GmbH, 33106 Paderborn (DE)
(72) Erfinder: FRANK, Gabriella, 99310 Arnstadt (DE)
(74) Vertreter: Viering, Jentschura & Partner mbB Patent- und Rechtsanwälte

(56) Entgegenhaltungen:
- CN-A- 108 435 386
- CN-A- 108 889 365
- US-A- 5 226 606
- US-A- 5 522 559

## Beschreibung

Die Erfindung bezieht sich auf ein Brechwerk gemäß dem Oberbegriff von Anspruch 1. Verschiedene Ausführungsbeispiele betreffen allgemein ein Brechwerk, einen Leergutrücknahmeautomat und ein Verfahren.

Ein eingangs erwähntes Brechwerk ist beispielsweise aus der CN 108 889 365 A bekannt. Weitere Beispiele werden in US 5 522 559 A, CN 108 435 386 A und US 5 226 606 A gegeben. Leergut, welches z.B. in Form von Gebinden vorliegt, wie z.B. Mehrwegflaschen, beispielsweise Kunststoff- und Glasflaschen, wird von Verbrauchern mittels Leergutrücknahmeautomaten, welche z.B. in Supermärkten aufgestellt sind, zurückgegeben. Hierzu wird das Leergut von den Verbrauchern in der Regel einzeln in den Leergutrücknahmeautomaten eingegeben und darin entwertet. Das entwertete Leergut wird dann abtransportiert und zur Weiterverwertung ausgegeben, z.B. an einen Sammelbehälter. Die Entwertung kann beispielsweise mittels einer Zerkleinerung des Leerguts erfolgen, d.h. dass dieses in mehrere kleinere Teile zerlegt wird.

Ein herkömmlicher Mechanismus zum Zerkleinern von Leergut weist eine oder mehr als eine waagerecht angeordnete, rotierende Walze auf, welche das Leergut gegeneinander oder gegen einen sogenannten Kamm zerhackt. Alternativ werden Mahlwerke, schnell rotierende Scheiben oder Hammerwerke verwendet, um das Leergut zu zerkleinern.

Gemäß verschiedenen Ausführungsformen wird ein Brechwerk bereitgestellt, welches eine kleinere Bauform aufweist und somit auch in einem Einzelgerät (ein sogenanntes Standalone-System) verbaut werden kann. Anschaulich ermöglicht das Brechwerk, die Verarbeitung eines Gebindes mittels eines auf seiner Spitze stehenden Kegels, welcher exzentrisch rotiert und das Gebinde gegen einen Trichter zerdrückt. Durch diese Konfiguration des auf der Spitze stehenden exzentrisch rotierenden Kegels wird der Platzbedarf reduziert.

Beispielsweise ist es auch einfacher, die maximale Bruchstückgröße zu begrenzen, indem der Spalt, durch welchen hindurch das Gebinde transportiert wird, verkleinert oder vergrößert wird.

Beispielsweise werden eine kleinere Einfüll- und/oder kleinere Auslassöffnung ermöglicht, was die Verteilung der Glassplitter und des Glasstaubes im System minimiert, so dass der Aufwand zu deren Minimierung reduziert wird.

Gemäß verschiedenen Ausführungsformen kann ein Brechwerk aufweisen: ein Gestell, welches einen Kanal (z.B. innerhalb eines Trichters bereitgestellt) aufweist, wobei sich der Kanal entlang einer Richtung verengt; einen Brechkörper, welcher mittels des Gestells in dem Kanal gehalten ist, wobei der Brechkörper um eine Achse herum bewegbar gelagert ist, wobei die Achse entlang der Richtung verläuft; wobei der Brechkörper sich entlang der Richtung verjüngt; und wobei zwischen dem Brechkörper und einer Brechwand (die beispielsweise den Trichter bereitgestellt oder Teil dessen ist), welche den Kanal begrenzt, ein Spalt gebildet ist, welcher sich entlang der Richtung verengt uns wobei der Brechkörper exzentrisch gelagert ist, so dass dieser die Achse umkreist.

Es zeigen
- Figuren 1A bis 8: jeweils ein Brechwerk gemäß verschiedenen Ausführungsformen in verschiedenen schematischen Ansichten;
- Figur 9A bis 10B: jeweils eine Brechrippe gemäß verschiedenen Ausführungsformen in verschiedenen schematischen Ansichten;
- Figur 11: einen Leergutrücknahmeautomat gemäß verschiedenen Ausführungsformen einer schematischen Seitenansicht oder Querschnittsansicht; und
- Figur 12: ein Verfahren gemäß verschiedenen Ausführungsformen in einem schematischen Ablaufdiagramm.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung (z.B. ohmsch und/oder elektrisch leitfähig, z.B. einer elektrisch leitfähigen Verbindung), eines direkten oder indirekten Anschlusses sowie einer direkten oder indirekten Kopplung. In den Figuren werden identische oder ähnliche Elemente mit identischen Bezugszeichen versehen, soweit dies zweckmäßig ist. Eine Kupplung kann eine Kopplung aufweisen, die eingerichtet ist, eine mechanische Wechselwirkung (z.B. Kraft, Drehmoment, etc.) zu übertragen.

Gemäß verschiedenen Ausführungsformen wird ein Brechwerk bereitgestellt, welches es ermöglicht, ein Glas-Gebinde in einem Leergut-Rücknahmeautomaten zu zerkleinern und damit beispielsweise eine Entwertung des Glas-Gebindes konform mit einem Pfandsystem (z.B. der Deutschen Pfandsystem GmbH) herbeizuführen. Die dabei erzeugten Bruchstücke des Glas-Gebindes können in einer vom Kunden gewünschten maximalen Größe bereitgestellt sein oder werden. Ferner ermöglicht das Brechwerk, den Fremdkörpereintrag (z.B. Glassplitter) in das umgebende System zu minimieren. Hierin wird unter anderem auf Leergut oder Glas-Gebinde Bezug genommen, welche mittels des Brechwerks verarbeitet werden. Allgemeiner können mittels des Brechwerks auch ein Körper (z.B. Gebinde) eines anderen Materials verarbeitet (z.B. zerkleinert) werden, wie beispielsweise ein (z.B. spröder) Kunststoff, eine Keramik, ein Steingut oder ein anderer spröder Werkstoff. Ein Gebinde kann beispielsweise einen Behälter aufweisen, z.B. eine Verpackung, oder einen leeren Behälter (auch als Leergebinde oder Leergut bezeichnet).

Im Weiteren bezeichnet der Begriff "Leergut" einen einzelnen (zumindest im Wesentlichen) leeren Getränkebehälter, z.B. eine Einwegflasche, beispielsweise eine Glasflasche. Das Leergut kann im Allgemeinen Glas und/oder eine Keramik aufweisen oder daraus gebildet sein.

Mittels des hierin beschriebenen Brechwerks (anschaulich auch als Kegelbrechwerk bezeichnet) wird es ermöglicht, Flaschen (z.B. Glasflaschen) in einem Leergutrücknahmeautomaten zu zerkleinern und so für die Wiederverwendung vorzubereiten. Durch die Zerkleinerung werden die Flaschen auch, wie vom Systemgeber vorgegeben, entwertet.

Gemäß verschiedenen Ausführungsformen wird ein elektrisch betriebenes Kegelbrechwerk bereitgestellt, welches einen oben liegenden Antrieb (z.B. einen Motor aufweisend) aufweist. Der Brechkörper des Kegelbrechwerks kann sich entlang einer Richtung verjüngen, die nach unten zeigt (d.h. zur Erdoberfläche hin). Der so geformte Brechkörper wird anschaulich auch als Brechkegel oder vereinfacht als Kegel bezeichnet. Der Brechkegel kann in einem dazu passend geformten (z.B. trichterförmigen) Kanal angeordnet sein, welcher nach außen durch eine Brechwand begrenzt ist. Die so geformte Brechwand kann anschaulich als Brechtrichter oder vereinfacht als Trichter bezeichnet werden. Die Brechwand kann beispielsweise trichterförmig sein.

Der Brechkegel kann anschaulich auf dem Kopf stehend angebracht sein, d.h. mit dem verjüngten Ende nach unten gerichtet (d.h. der Erdoberfläche zugewandt). Das verjüngte Ende muss nicht notwendigerweise spitz sein, wir aber zum einfacheren Verständnis hierin als Spitze bezeichnet.

Der Brechkegel kann in einem nach unten sich verjüngenden Brechtrichter (z.B. mit einem runden oder mehreckigen Querschnitt) angeordnet sein. Der Brechtrichter kann nach oben und unten offen sein, d.h. eine untere und eine obere Trichteröffnung aufweisen. In der Mitte der unteren Trichteröffnung kann die Lagerung des Brechkegels angeordnet sein.

In der Mitte des Brechtrichters kann der Brechkegel (z.B. mit einem runden oder mehreckigen Querschnitt) auf seiner Spitze liegend gelagert sein. Am oberen Ende des Brechkegels kann ein Exzenter (z.B. eine Exzenterscheibe) angebracht sein. Der Exzenter kann über dem Brechkegel und unter der dessen oberen Lagerung angeordnet sein. Der Exzenter bewirkt eine exzentrische Bewegung des Brechkegels, was das Brechen des Gebindes verbessert.

Oberhalb der Lagerung des Brechkegels kann der Antrieb (z.B. der Antriebsmotor) angeordnet sein. Dies verringert die Baugröße.

Der Spalt zwischen dem Brechkegel und dem Brechtrichter (auch als Brechspalt bezeichnet) kann nicht-parallel verlaufen, sondern sich nach unten hin verengen. Dies erleichtert es, das Gebinde in den Spalt einzuführen und somit zwischen den Brechkegel und den Brechtrichter zu verlagern.

Der Brechspalt kann an seiner Oberseite eine Ausdehnung aufweisen, die um ein Vielfaches größer ist als die Ausdehnung des größten Gebindes (z.B. dessen Durchmesser), das verarbeitet werden soll. Dies erleichtert es weiter, das Gebinde in den Spalt einzuführen und somit zwischen den Brechkegel und den Brechtrichter zu verlagern.

Der Brechspalt zwischen dem Brechkegel und dem Brechtrichter kann an seiner Unterseite eine Ausdehnung aufweisen, die um ein Vielfaches größer ist als das größte Teilstück, welches erzeugt werden soll. Dies erleichtert es, das Resultat des Brechens, d.h. die Teilstücke des Gebindes, wieder aus dem Spalt herauszubringen.

Die Ausdehnung (z.B. der Durchmesser) des Brechkegels ergibt sich aus dem Verhältnis des größten zu verarbeitenden Gebindes und der größten zu verarbeitenden Wandstärke/Bodenstärke. Ebenso ergeben sich aus diesem Verhältnis das Gewicht des Brechkegels und die Antriebskraft des Motors. Der Durchmesser des Brechtrichters ergibt sich aus dem Durchmesser des Brechkegels plus maximal das Doppelte der Spaltbreite. Der Motor kann ein langsam drehender Motor sein, da eine langsamere Drehbewegung die Staubentwicklung reduziert. Die Drehzahl kann von der Ausdehnung der Exzenterscheibe unabhängig sein, da die Drehzahl von der Motor/Getriebe- Konstellation definiert wird.

Beispielsweise kann eine Drehzahl des Exzenters im Betrieb des Brechwerks in einem Bereich von ungefähr 1 U/min bis ungefähr 300 U/min (Umdrehungen pro Minute) sein, z.B. in einem Bereich von ungefähr 10 U/min bis ungefähr 200, z.B. in einem Bereich von ungefähr 20 U/min bis ungefähr 100. Beispielsweise kann eine Ausdehnung des Kanals (und/oder Trichters) entlang der Antriebsachsenrichtung in einem Bereich von ungefähr 250 mm bis ungefähr 1000 mm (Millimeter) sein, in einem Bereich von ungefähr 400 mm bis ungefähr 800 mm. Beispielsweise kann eine Ausdehnung des Kanals (und/oder Trichters) quer zu der Antriebsachsenrichtung in einem Bereich von ungefähr 300 mm bis ungefähr 1000 mm (z.B. ungefähr 40 cm) sein und/oder sich um mindestens 10% (z.B. um mindestens 20 %, z.B. um mindestens 30 %) verengen. Beispielsweise kann eine Ausdehnung des Brechkörpers quer zu seiner Drehachse in einem Bereich von ungefähr 200 mm bis ungefähr 900 mm sein und/oder sich um mindestens 10% (z.B. um mindestens 20 %, z.B. um mindestens 30 %) verjüngen. Beispielsweise kann eine Ausdehnung des Spalts quer zu der Antriebsachsenrichtung in einem Bereich von ungefähr 100 mm bis ungefähr 300 mm sein und/oder sich um mindestens 10% (z.B. um mindestens 20 %, z.B. um mindestens 30 %) verengen.

Der Antrieb kann auch ein Winkelgetriebe aufweisen, welches den Motor mit dem Brechkegel kuppelt und über dem Brechkegel angeordnet ist. Es kann aber auch nur das Getriebe über dem Brechkegel angeordnet sein oder der Antrieb ohne Getriebe bereitgestellt sein oder werden. Dies kann es ermöglichen, das Brechwerk an den gewünschten Verwendungszweck und das verfügbare Platzangebot anzupassen.

Die Trichteröffnung am Boden des Brechtrichters kann derart eingerichtet sein, dass dies zum Auffangbehältnis passt.

Optional kann am Boden des Brechtrichters eine Überwachungssensorik angeordnet sein, um einen Schutz gegen Betrug bereitzustellt.

Die Exzenterscheibe kann einen Durchmesser aufweisen, der sich durch das Verhältnis des Kegeldurchmessers zu dem Trichterdurchmesser ergibt.

Der Brechkegel kann sich relativ zum Exzenter drehen (auch als Drehen des Brechkegels bezeichnet). Die Drehgeschwindigkeit des Brechkegels ergibt sich aus der Drehzahl und dem Zusammenspiel des Anschlagpunkts der Exzenterscheibe zu Messpunkt an der Außenwand des Brechkegels.

An der Außenwand des Brechkegels und/oder der Innenwand des Brechtrichters können Brechrippen befestigt sein, welche das Zerbrechen des Gebindes erleichtern. Die Brechrippen können senkrecht angeordnet sein (z.B. von der Innenwand bzw. Außenwand weg stehen). Die Dimensionierung der Brechrippen kann abhängig vom der Wand-, bzw. Bodenstärke der zu verarbeitenden Gebinde bereitgestellt sein.

Der Antrieb (z.B. der Motor) kann bei einer liegenden Montage mittels eines Winkelgetriebes einen Teil des möglichen Zuführungsbereichs oberhalb des Brechkegels blockieren. Dem kann beispielsweise mittels einer erhöhten Lagerung des Brechkegels entgegengewirkt werden. Beispielsweise kann der Brechkegel um ein Vielfaches des größten zu verarbeitenden Durchmessers höher sein als der Brechtrichter. Alternativ oder zusätzlich kann optional der Motor mittels einer entsprechenden Welle vom Brechkegel entfernt angeordnet sein, so dass der Zuführungsbereich frei bleibt.

Eine liegende Montage mit Winkelgetriebe ermöglicht es, den Motor beliebig auf dem Brechwerk anzubringen, da hier die Ausrichtung lediglich durch die Platzverhältnisse und die Gebinde-Zuführung bestimmt werden.

Wenn es die Platzverhältnisse ermöglichen, kann der Motor senkrecht auf dem Kegel montiert werden. Somit können das Getriebe und/oder die Motorwelle unmittelbar auf den Brechkegel wirken.

Sind die Platzverhältnisse geringer, kann ein Winkelgetriebe mit einer anderen Winkelzahl als 90° eingesetzt werden, um den Zuführungsbereich frei zu geben und/oder die Höhenmaße nicht zu überschreiten.

Der Motor kann eine gegen Glasstaub geeignete Schutzklasse aufweisen.

Gemäß verschiedenen Ausführungsformen kann eine obenliegende Lagerung des Brechkegels (auch als obere Lageranordnung bezeichnet) bereitgestellt sein oder werden, welche beispielsweise eine Exzenterscheibe aufweist. Die obere Lageranordnung kann verstärkt ausgeführt sein, da im Betrieb hier große Kräfte wirken können. Bedingt durch den konisch zulaufenden Brechspalt kann auf den Brechkegel eine Kraft in Richtung zu der oberen Lageranordnung hin wirken. Die Lagerung der Exzenterscheibe kann derart eingerichtet sein, dass diese Kraft aufgenommen wird und nur wenig bis gar nicht an den Antrieb (z.B. eine Motor- Getriebe-Einheit) weiter gegeben wird. Beispielsweise kann die obere Lageranordnung ein oder mehr als ein Doppel-Kugellager und/oder zweireihiges-Rillenkugellager aufweisen oder daraus gebildet sein. Diese Lagertypen können eine größere vertikale und/oder horizontale Kraft aufnehmen.

Optional kann die obere Lageranordnung gekapselt sein, um deren Beeinträchtigung durch Glasstaub zu verringern.

Der Exzenter (z.B. eine Exzenterscheibe) kann verstärkt ausgeführt werden, um größere Kräfte aufzunehmen. Die Dimensionierung der Exzenterscheibe kann abhängig vom Verhältnis des Kegeldurchmessers zu dem Brechspalt sein. Die Dimensionierung der Exzenterscheibe kann derart eingerichtet sein, dass der Spalt oben (an dem Zuführbereich), im geöffneten Zustand, dem gewünschten Vielfachen des größten zu verarbeitenden Gebindes entspricht. Im geschlossenen Zustand kann der Spalt unten die Breite für das größte erlaubte Bruchstück aufweisen.

Die Lagerung des Brechkegels in der Exzenterscheibe kann ähnlich ausgeführt werden, wie oben zu der Lagerung der Exzenterscheibe (d.h. zwischen dem Antrieb und der Exzenterscheibe) ausgeführt wurde. Anschaulich können somit beide Lagerstellen ähnlichen Kräften widerstehen.

Die Lagerung des Brechkegels in/an der Exzenterscheibe kann auch innerhalb (z.B. dem oberen Anschnitt) des Brechkegels angeordnet sein. Dann kann an der Exzenterscheibe lediglich eine Welle angebracht sein, was deren Austausch erleichtert.

Der Brechkegel kann (z.B. an seinem oberen Abschnitt, anschaulich das breitere Ende) einen oberen Durchmesser aufweisen, der ein Vielfaches des größten zu verarbeitenden Flaschendurchmessers entspricht. Der untere Umfang kann ein Vielfaches des kleinsten zu verarbeitenden Gebindes sein oder wird durch das größte zu erzeugende Bruchstück bestimmt.

Der Brechkegel kann eine runde Außenkontur oder eine vieleckige Außenkontur aufweisen. Die Masse des Brechkegels kann angepasst sein an die Kräfte, die sich aus Durchmesser und Wand- /Bodenstärke der zu verarbeitenden Gebinde ergeben. Die Masse kann beispielsweise angepasst werden, wenn der zur Verfügung stehende Bauraum begrenzt ist.

Die Masse des Brechkegels kann wiederum Auswirkungen auf den Antrieb (z.B. eine Motor-Getriebe-Einheit) haben, da diese eine kleinere Masse des Brechkegels (d.h. weniger Trägheitsmoment des Brechkegels) mit mehr Kraft kompensiert, um die Flaschen zu brechen. Die untenliegende Lagerung (auch als untere Lageranordnung bezeichnet) des Brechkegels kann ein Traglager (z.B. ein Kugelgelenk) oder ein konisches Drehlager aufweisen oder daraus gebildet sein. Ein Traglager (auch als Radiallager bezeichnet) kann beispielsweise kostengünstig bereitgestellt werden, da solche Lager auch in der Automobilindustrie zum Halten der Vorderrad-Aufnahme Anwendung finden.

Die Seitenwand des Brechkegels kann mehrere Aussparungen (z.B. Nuten) aufweisen, um die sogenannten Brechrippen aufzunehmen. Der Abstand der Aussparungen voneinander kann an den maximalen Gebindedurchmesser angepasst sein und/oder diese können gleichmäßig auf dem Kegelumfang verteilt sein. Die Aussparungen können derart eingerichtet sein, dass das Einsetzen der Brechrippen von oben aus ermöglicht wird.

Der Brechkegel kann an seiner Oberseite an einen zylindrischen Aufsatz des Brechkörpers angrenzen. Dieser Aufsatz kann eine Prallfläche bereitstellen, beispielsweise für Flaschen, die in die Verarbeitung eingeschleust werden. Der Aufsatz kann derart eingerichtet sein, dass er diese Kräfte beim Einschleusen aufnehmen kann. Mittels des zylindrischen Aufsatzes kann das Glas lediglich in den Spalt geführt werden, z.B. ohne dieses zu brechen.

Weiterhin kann der Aufsatz in der Lage sein, die Kräfte die am Brechkegel entstehen, über den Exzenter an das obere Drehlager weiterzugeben. Dasselbe gilt für das Drehmoment, welches von dem Exzenter auf den Brechkegel übertragen werden soll. Die Höhe des Aufsatzes kann an den Durchmesser des größten zu verarbeitenden Gebindes angepasst (beispielsweise gleich oder größer dazu) sein.

Der Aufsatz kann einen optionalen vollflächigen Deckel aufweisen, der das Innere des Aufsatzes verschließen kann. Der Deckel kann mit dem Exzenter gekuppelt sein. Ein Deckel kann beispielsweise ermöglichen, den Brechkegel mit einem Füllmaterial zu beschicken, um dessen Masse zu erhöhen.

Verfügt der Brechkegel über ausreichend eigene Masse, so kann der Deckel auch Speichen aufweisen. Die Speichen können die Konstruktion vereinfachen, allerdings auch zulassen, dass sich Glassplitter und Glasstaub im Inneren des Brechkegels absetzen können.

Der obere Umfang des Brechtrichters kann angepasst sein an den oberen Durchmesser des Brechkegels plus das Vielfache des Durchmessers des maximal zu verarbeitenden Gebindes. Der untere Umfang des Brechtrichters kann sich aus dem unteren Durchmesser des Brechkegels und einem Vielfachen des Durchmessers des kleinsten zu verarbeitenden Gebindes oder des kleinsten zulässigen Bruchstückes ergeben.

Der Brechtrichter kann rund oder mehreckig eingerichtet sein, z.B. übereinstimmend mit dem Brechkegel. Die Trichterwand (allgemeiner auch als Brechwand bezeichnet) kann derart massiv ausgebildet sein, dass diese die auftretenden Druckkräfte aufnehmen kann und nach der Verarbeitung von 1.000.000 oder mehr Flaschen noch funktionsfähig ist.

Der Brechtrichter kann im Inneren mehrere Aussparungen (z.B. Nuten) aufweisen, um die Brechrippen aufzunehmen. Der Abstand der Aussparungen voneinander kann sich durch den maximalen Gebindedurchmesser ergeben und/oder diese können gleichmäßig auf der Trichterinnenseite verteilt sein. Die Aussparungen können derart eingerichtet sein, dass das Einsetzen der Brechrippen von oben erfolgen kann.

Der Trichtereinlass (auch als obere Trichteröffnung bezeichnet) kann von umgebenden Platten abgeschottet sein, um eventuellen Splitterflug einzudämmen. Die Platten können derart angeordnet sein, dass diese eine Einlassöffnung bereitstellen, die so klein wie möglich eingerichtet sein kann. Optional kann in dem Trichtereinlass (z.B. rings um den Brechkegel herum) eine Borstenleiste angeordnet sein. Die Borstenleiste minimiert den Splitterflug zusätzlich. Die Borstenleiste kann derart eingerichtet sein, dass diese dicht am Brechkegel anliegt und so den Spalt überbrückt. Der Brechkegel drückt bei seinem Umlauf die Borsten der Borstenleiste beiseite. Die Borsten bieten beispielsweise derart viel Widerstand, dass eine Flasche hindurch gleiten kann, aber Glassplitter darin stecken bleiben.

Der Trichterausgang (auch als untere Trichteröffnung bezeichnet) kann derart eingerichtet sein, dass er den Weg zwischen Brechtrichter und Auffangbehälter sicher überbrückt und so wenig wie möglich Splitter und Glasstaub in die Umgebung entlässt. Der Trichterausgang kann derart ausgeführt sein, dass die Bruchstücke sicher abfließen und es zu keinen Verklemmungen kommen kann. Sollte eine Überwachung des Trichterausganges nötig sein, so können entsprechende Sensoren an dem Trichterausgang angeordnet sein. Beispielsweise kann eine Lichtschranke (z.B. Flächenlichtschranke), ein Ultraschallsensor oder eine Schwerkraftklappe verwendet werden.

Alternativ oder zusätzlich zu der Überwachung kann eine Vorrichtung am Trichterausgang angeordnet sein, welche eine nicht mechanisch zerstörte Wertmarke (z.B. einen RFID) final entwertet.

Der Brechspalt kann am oberen Ende (d.h. an dem Zuführungsbereich) derart eingerichtet sein, dass das Größte zu verarbeitende Gebinde einfach hinein gleiten kann. Beispielsweise kann dessen Spaltbreite ein Vielfaches des Durchmessers des Gebindes aufweisen. Aufgrund des Exzenters kann sich der Spalt erweitern (auch als offener Spalt bezeichnet) und verkleinern (auch als geschlossener Spalt bezeichnet), z.B. periodisch und/oder je nach Stellung des Brechkegels.

Der geschlossene Spalt kann derart eng eingerichtet sein, dass auch der kleinste zu verarbeitende Gebindedurchmesser sicher erfasst und verarbeitet wird. Der Spalt kann bei der Verarbeitung nur so weit verkleinert werden, wie unbedingt nötig. Diese untere Grenze wird durch das größte erlaubte Bruchstück bestimmt. Ferner können die Brechrippen derart eingerichtet sein relativ zu dem Spalt, dass deren Kollision vermieden wird. Aufgrund der unteren Lageranordnung, ist die Amplitude der Auslenkung des Brechkegels zu seiner Spitze hin kleiner. Damit verjüngt sich der Brechspalt in Richtung der unteren Trichteröffnung.

Das Zuführen des Gebindes in den Spalt hinein kann (auch als Beschickung bezeichnet) kann aus einer seitlichen Richtung (z.B. seitlich am oberen Ende des Brechtrichters) erfolgen oder kann aus einer vertikalen Richtung (z.B. senkrecht in den Brechspalt) erfolgen.

Im Allgemeinen kann das Zuführen auch entlang eines beliebigen Winkels (auch als schräges Zuführen bezeichnet) zwischen der vertikalen Richtung (auch als vertikales Zuführen bezeichnet) und der seitlichen Richtung (auch als seitliches Zuführen bezeichnet) erfolgen.

Das seitliche Zuführen am oberen Ende des Brechtrichters kann beispielsweise bereitgestellt werden, indem ungefähr die Hälfte einer Seite des Trichters (der beispielsweise quadratisch eingehaust ist) offen ist. Ein Gebinde (z.B. eine Flasche) kann beispielsweise liegend zugeführt werden und beim Eintritt in den Brechtrichter über den Trichterrand in den Brechspalt hinein kippen. Schließt sich der Brechspalt, so kann das Gebinde zwischen der Brechwand und einer Brechrippe zerstört werden. Das seitliche Zuführen kann erfordern, dass sich eine Flasche ein wenig aufstellt, bzw. der Radius des Brechtrichters und des Brechkegels derart eingerichtet ist, dass die Flasche selbstständig in den Brechspalt eintaucht und dort zerstört wird.

Für das seitliche Zuführen kann optional der Aufsatz auf dem Brechtrichter verwendet werden, da das Gebinde (z.B. die Flasche) an diesen anstoßen kann, um dann in den Brechtrichter hinein zu kippen. Es kann aber auch, je nach der Art und Form des Gebindes, der Trichter einen Aufsatz aufweisen, welcher es erleichtert, dass die Flasche zuerst tiefer in den Spalt eintaucht, bevor diese zerdrückt wird. Dieser Aufsatz kann ferner den Splitterflug hemmen.

Das vertikale Zuführen kann von oben in den Brechspalt hinein und an dem Antrieb (z.B. dem Motor) vorbei erfolgen. Das vertikale Zuführen kann beispielsweise erfolgen, wenn das Brechwerk deutlich tiefer als die Zuführstrecke eingebaut ist. Zum vertikalen Zuführen kann das Brechwerk eine gekapselte, röhrenförmige Einlaufgeometrie (auch als Zuführkanal bezeichnet) aufweisen. Je länger der Zuführkanal (z.B. ein Rohr) ist, desto geringer kann der Splitterflug sein, z.B. am Übergang zwischen Zuführkanal und Transportstrecke. Der Ausgang des Zuführkanals kann derart ausgerichtet sein, dass dieser mittig auf eine Brechrippe in der Innenseite des Trichters gerichtet ist. Dies schützt die Wandung des Brechtrichters vor übermäßiger Belastung bzw. fungiert die Brechrippe als Opfermaterial.

Zum vertikalen Zuführen können auch Schottbleche oder Schottfolien eingesetzt werden, je nachdem wie viel kinetische Energie das leichteste zu erwartende Gebinde aufweist.

Das schräge Zuführen kann eine Mischung aus dem vertikalen Zuführen und dem seitlichen Zuführen (bei dem das Gebinde beispielsweise liegend transportiert wird) sein. Je nach dem Winkel der Richtung (auch als Neigungswinkel bezeichnet), aus welcher das schräge Zuführen erfolgt, kann eine der Ausgestaltungen Anwendung finden, wie vorstehend zum vertikalen Zuführen und dem seitlichen Zuführen erläutert ist.

Die Brechrippen können massive Stahlrippen aufweisen oder daraus gebildet sein. Beispielsweise können die Brechrippen einen rechteckigen Querschnitt aufweisen. Jede Brechrippe kann eine oder mehr als eine Symmetrieachse aufweisen, bezüglich welcher Brechrippe symmetrisch eingerichtet ist. Beispielsweise kann die Brechrippe bezüglich einer oder mehr als einer Rotationsebene symmetrisch eingerichtet sein. Dies ermöglicht es, jede Brechrippen mehrfach (d.h. mindestens zweimal) wieder zu verwenden, beispielsweise bis zu viermal. Dies ist abhängig von den zu verarbeitenden Gebinden und der dadurch zu erwartenden Abnutzung und Verformung der Brechrippen. Die Brechrippen, welche an den Brechtrichter und an dem Brechkegel angeordnet sind, können beispielsweise einander gleichen. Dies erleichtert die Wiederverwendbarkeit.

Die Befestigung der oder jede Brechrippe kann beispielsweise mittels mehrerer Schrauben erfolgen, die in die Stirnseite der Brechrippe eingeführt und in die Wand des Brechtrichters bzw. Brechkegels eingeschraubt werden. Die Brechrippe kann beispielsweise zu zwei Dritteln in der Wand des Brechtrichters bzw. Brechkegels versenkt sein, was die Stabilität verstärkt und die nicht frei liegenden Wangen der Brechrippen vor Beschädigung schützt.

Die beiden äußeren Drittel der Rippen, die je nach Montage aus der Wand hervor stehen, können an den Enden abgeschrägt sein, was es erleichtert, dass das Gebinde zwischen diese gleitet. Das mittlere Drittel der Brechrippe kann nicht abgeschrägt sein. Das mittlere Drittel der Brechrippe kann sich somit passgenau in die Aussparung in der Wand einfügen (d.h. formschlüssig), womit auf die Brechrippe wirkende Kräfte an den Brechtrichter bzw. den Brechkegel übertragen werden, was die Belastung auf die Schraubverbindung reduziert. Beispielsweise kann die formschlüssige Fügung die gesamte Kraftübertragung übernehmen und die Schraubverbindungen lediglich die Brechrippe am Herausfallen hindern, wenn diese sich im Leerlauf befinden.

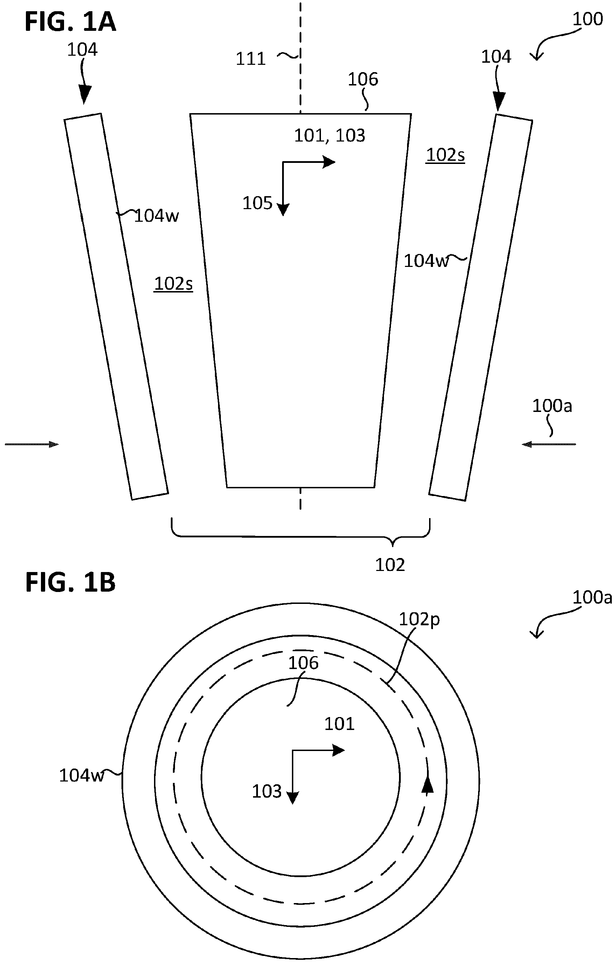

**Fig.1A** veranschaulicht ein Brechwerk 100 gemäß verschiedenen Ausführungsformen in einer schematischen Seitenansicht oder Querschnittsansicht (z.B. entlang Richtung 105 geschnitten) und **Fig.1B** das Brechwerk 100 in einer schematischen Querschnittsansicht 100a (z.B. entlang der seitlichen Richtungen 101, 103 geschnitten). Das Brechwerk 100 kann einen sich in Richtung 105 verengenden Kanal 102 (auch als Brechkanal 102 bezeichnet) in einem Gestell 104 aufweisen, in dem ein sich in Richtung 105 verjüngender Brechkörper 106 angeordnet ist. Das Gestell 104 kann eine oder mehr als eine Wand 104w (auch als Brechwand bezeichnet) aufweisen, welche den Brechkanal 102 begrenzt. Beispielsweise kann der Brechkanal 102 die Brechwand 104w durchdringen und/oder von dieser umgeben sein.

Dem Brechkörper 106 kann eine Achse 111 (auch als Antriebsachse 111 bezeichnet) bereitgestellt sein, um welche herum dieser drehbar oder zumindest bewegbar sein kann. Die Antriebsachse 111 kann in dem Brechkanal 102 angeordnet sein und parallel zu Richtung 105 (auch als Antriebsachsenrichtung 105 bezeichnet) sein. Die Brechwand 104w kann beispielsweise einen Trichter aufweisen oder daraus gebildet sein (auch als Brechtrichter bezeichnet). Dies vereinfacht die Konstruktion. Die Antriebsachsenrichtung 105 kann im Betrieb beispielsweise entlang der Gravitationsrichtung sein.

Zwischen dem Brechkörper 106 und der Brechwand 104w kann ein Spalt 102s gebildet sein, welcher sich in Antriebsachsenrichtung 105 verengt. Der Spalt 102s kann entlang eines geschlossenen Pfads 102p erstreckt sein, der den Brechkörper 106 umgibt.

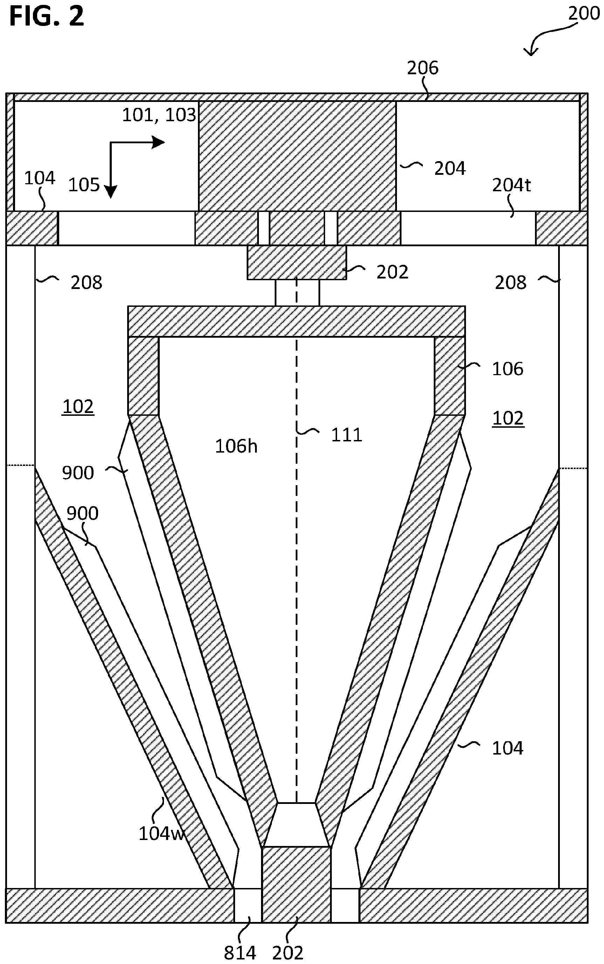

**Fig.2** veranschaulicht ein Brechwerk 200 gemäß verschiedenen Ausführungsformen in einer schematischen Querschnittsansicht, z.B. das Brechwerk 100. Der Brechkörper 106 und/oder die Brechwand können eine Vielzahl von Brechrippen aufweisen, auf welche später noch genauer eingegangen wird.

Das Gestell 104 kann einen Motor 204 stützen, welcher mit dem Brechkörper 106 gekuppelt ist zum Übertragen eines Drehmoments auf den Brechkörper 106. Der Motor 204 kann beispielsweise innerhalb einer Abdeckung 206 des Gestells angeordnet sein. Der Motor 204 kann beispielsweise ein Elektromotor oder allgemeiner Teil eines anderen Antriebs 204 sein. Beispielsweise kann der Antrieb 204 ein Getriebe aufweisen, welche das von dem Motor 204 aufgenommene Drehmoment vergrößert und in den Brechkörper 106 einkoppelt. Mit anderen Worten kann das Getriebe die von dem Motor 204 aufgenommen Drehzahl verringern und in den Brechkörper 106 einkoppeln. Das Getriebe kann beispielsweise ein Winkelgetriebe aufweisen oder daraus gebildet sein. Dies verringert den Platzbedarf. Der Antrieb 204 kann auf einer Stützstruktur (z.B. einer Platte) des Gehäuses 104 ruhen, welches eine oder mehr als eine Durchgangsöffnung 204t aufweist, die mit dem Kanal 102 verbunden ist. Die Durchgangsöffnung 204t erleichtert das Einsetzen der Brechrippen 900 von oben ohne den Brechkörper 106 demontieren zu müssen.

Der Brechkörper 106 kann zwischen zwei Lageranordnungen 202 (z.B. unterhalb des Brechkörpers 106 und oberhalb des Brechkörpers 106) angeordnet und mittels diesen drehbar gelagert sein. Jede Lageranordnung 202 kann zumindest ein (d.h. ein oder mehr als ein) Drehlager aufweisen oder daraus gebildet sein.

Der Brechkörper 106 kann als Hohlkörper ausgebildet sein, d.h. einen Hohlraum 106h aufweisen. Optional kann in dem Hohlraum 106h ein Füllmaterial angeordnet sein oder werden. Das Füllmaterial kann beispielsweise ein Fluid (zum Beispiel Wasser) aufweisen oder daraus gebildet sein. Alternativ oder zusätzlich kann das Füllmaterial ein Granulat (z.B. Sand) aufweisen.

Das Gehäuse kann eine oder mehr als eine Öffnung 208 (auch als Einlassöffnung bezeichnet) aufweisen, welche sich beispielsweise auf einander gegenüberliegenden Seiten des Brechkörpers 106 erstreckt. Die oder jede Einlassöffnung 208 kann den Brechkanal 102 nach außen hin freilegen.

Der Antrieb kann ein Drehmoment entlang der Antriebsachsenrichtung 105 bewirken, welches dem Brechkörper eingekoppelt wird.

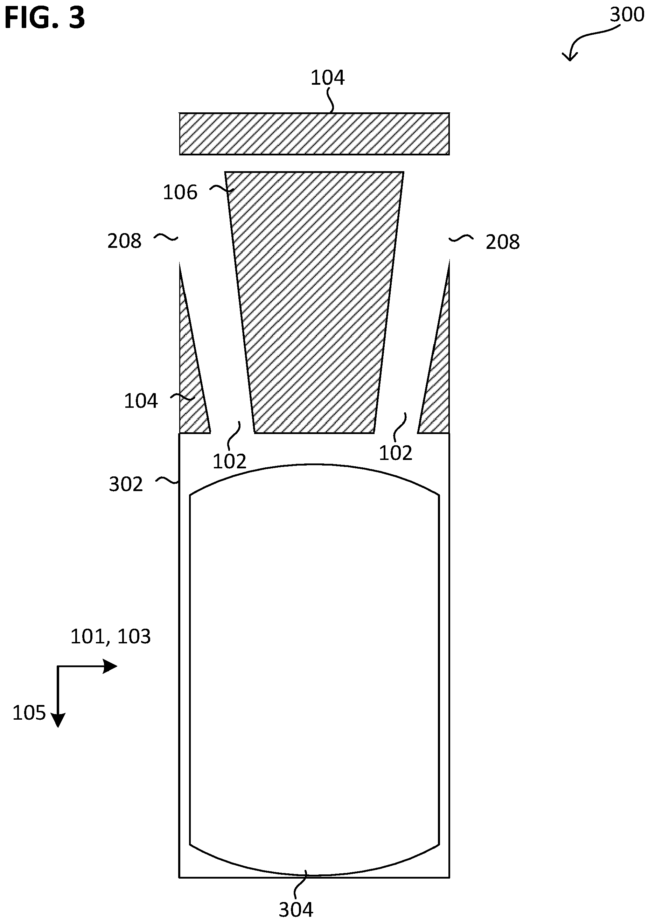

**Fig.3** veranschaulicht ein Brechwerk 300 gemäß verschiedenen Ausführungsformen in einer schematischen Querschnittsansicht, z.B. das Brechwerk 100 oder 200. Das Gestell 104 kann einen Behälter-Aufnahmeraum 302 aufweisen zum Aufnehmen eines Behälters 304. Der Brechkanal 102 kann in dem Behälter-Aufnahmeraum 302 münden. Der Behälter-Aufnahmeraum 302 kann beispielsweise ein Hohlraum sein, in welchem der Behälter 304 angeordnet werden kann. Der Behälter 304 kann beispielsweise einen Container aufweisen oder daraus gebildet sein.

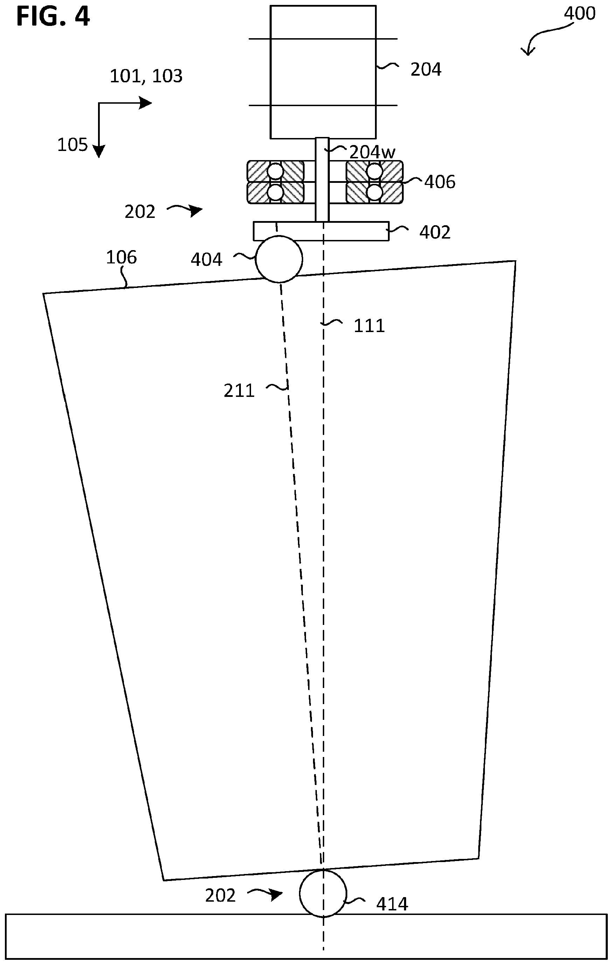

**Fig.4** veranschaulicht ein Brechwerk 400 gemäß verschiedenen Ausführungsformen in einer schematischen Querschnittsansicht, z.B. eines der Brechwerke 100 bis 300. Der Brechkörper 106 kann exzentrisch gelagert sein, so dass dieser die Antriebsachse 111 umkreist. Dazu kann die obere Lageranordnung 202 eine Exzenterscheibe 402 aufweisen, welche den Antrieb 204 mit dem Brechkörper 106 kuppelt. Die Exzenterscheibe 402 kann mittels einer Welle 204w der oberen Lageranordnung 202 mit dem Antrieb 204 gekuppelt sein.

Die Exzenterscheibe 402 und der Brechkörper können mittels eines ersten Drehlagers 404 der oberen Lageranordnung 202 miteinander gekuppelt sein, wobei das Drehlager 404 dem Brechkörper 106 eine Drehachse 211 bereitstellt. Das erste Drehlager 404 kann beispielsweise in der Exzenterscheibe 402 oder in dem Brechkörper 106 angeordnet sein. Die Drehachse 211 kann schräg zu der Antriebsachse 111 sein. Dies erreicht, dass der Brechkörper 106 bei seiner Bewegung um die Antriebsachse 111 herum abrollen kann.

Ferner kann die untere Lageranordnung 202 ein zweites Drehlager 414 aufweisen, welches den Brechkörpers 106 lagert. Die zwei Drehlager 404, 414 können beispielsweise Kugellager aufweisen oder daraus gebildet sein.

Die Drehachse 211 kann beispielsweise durch den Massenmittelpunkt des Brechkörpers 106 hindurch verlaufen oder diesem zumindest näher sein als die Antriebsachse 111. Die Antriebsachse 111 kann beispielsweise neben dem Massenmittelpunkt des Brechkörpers 106 angeordnet sein.

Die Welle 204w kann mittels eines mehrreihigen Drehlagers 406 gelagert sein. Diese reicht, dass die auf die Exzenterscheibe 402 wirkenden Kräfte besser aufgenommen werden.

Alternativ oder zusätzlich zu der Exzenterscheibe 402 kann auch ein Exzenterhebel oder Ähnliches verwendet werden.

Wird kein Exzenter verwendet, kann sich der Brechkörper 106 um die Antriebsachse 111 drehen (d.h. diese ist dann die Drehachse des Brechkörpers 106).

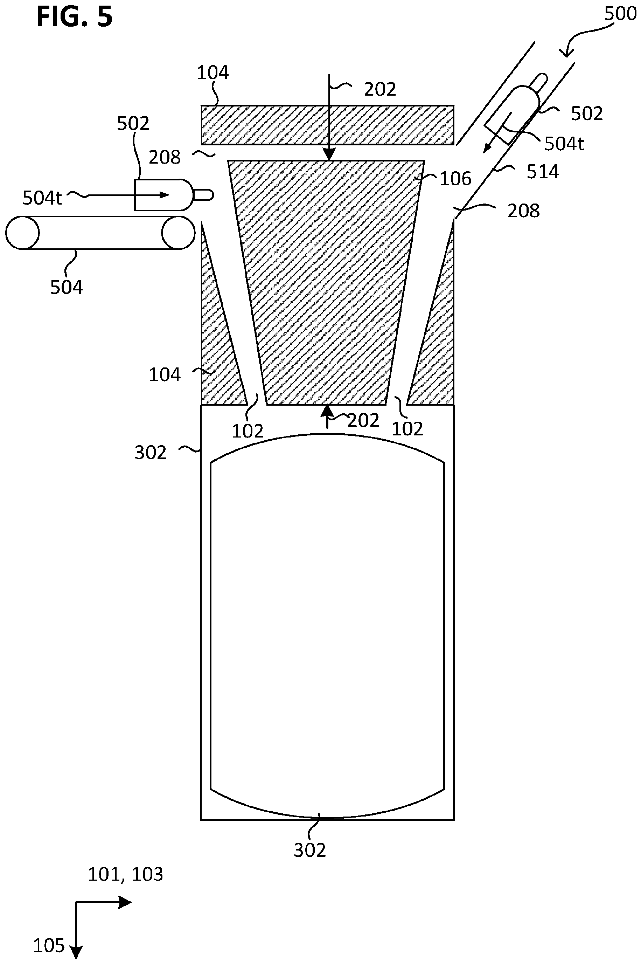

**Fig.5** veranschaulicht ein Brechwerk 500 gemäß verschiedenen Ausführungsformen in einer schematischen Querschnittsansicht, z.B. eines der Brechwerke 100 bis 400.

An dem Gehäuse 104 kann ferner eine Zuführvorrichtung angeordnet sein, welche einen Transportpfad 504t für ein zu brechendes Gebinde 52 (beispielsweise eine Flasche) in den Kanal 102 hinein, z.B. durch die Einlassöffnung 208 hindurch, bereitstellt. Die Zuführvorrichtung kann beispielsweise eine Gravitationsrutsche 514 und/oder ein Förderband 504 aufweisen. Die Gravitationsrutsche 514 kann beispielsweise einen schrägen Zuführkanal aufweisen oder daraus gebildet sein.

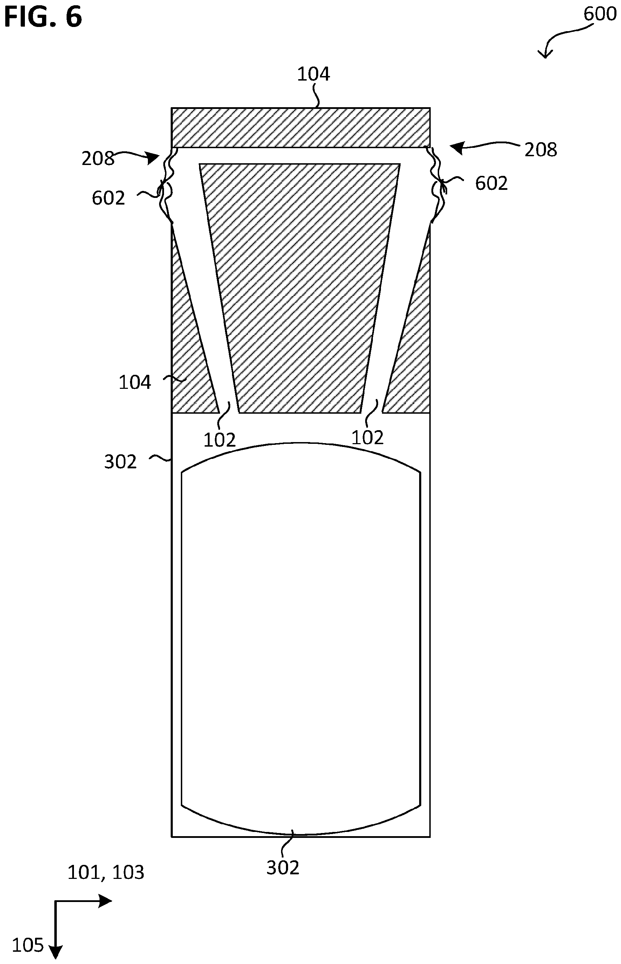

**Fig.6** veranschaulicht ein Brechwerk 600 gemäß verschiedenen Ausführungsformen in einer schematischen Querschnittsansicht, z.B. eines der Brechwerke 100 bis 500. An und/oder in dem Kanal 102 kann eine Vielzahl von Borsten 602 angeordnet sein, welche beispielsweise den Brechkörper 106 umgeben und/oder diesen körperlich kontaktieren. Dies verringert die Gefahr von Splitterflug. Die Vielzahl von Borsten 602 kann beispielsweise an dem Gestell 104 befestigt sein, z.B. an dessen Brechwand 104w.

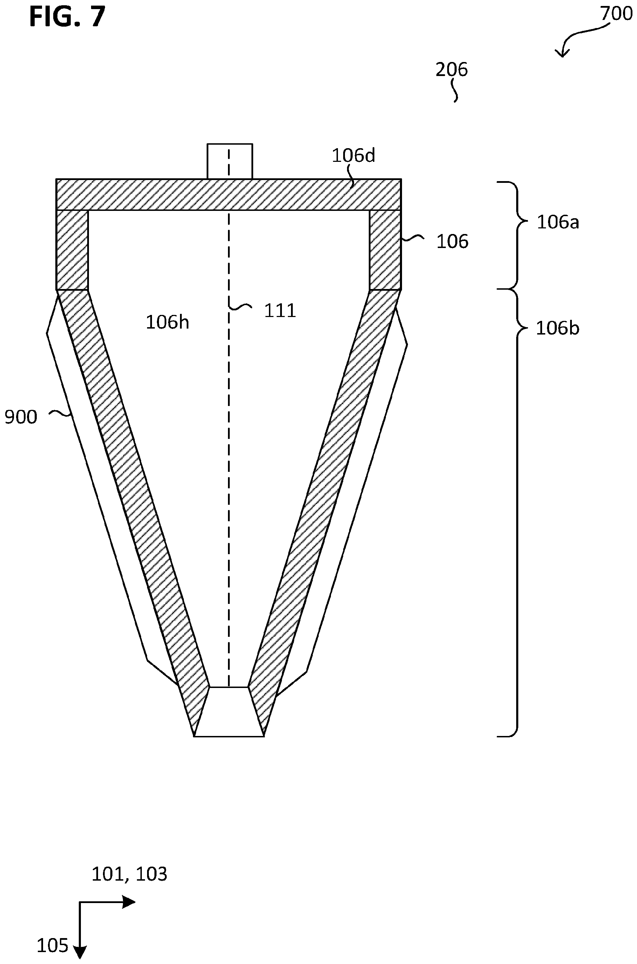

**Fig.7** veranschaulicht ein Brechwerk 700 gemäß verschiedenen Ausführungsformen in einer schematischen Querschnittsansicht, z.B. eines der Brechwerke 100 bis 600. Der Brechkörper 106 kann einen ersten (anschaulich oberen) Abschnitt 106a und einen zweiten (anschaulich unteren) Abschnitt 106b aufweisen, welche aneinandergrenzen. Die Außenwand des Brechkörpers 106 kann im Übergang von dem ersten Abschnitt 106a (anschaulich auch als Aufsatz bezeichnet) im zweiten Abschnitt 106b (anschaulich auch als Brechkegel bezeichnet) angewinkelt sein. Beispielsweise kann der zweite Abschnitt 106b einen kegelstumpfförmigen Grundkörper aufweisen und der erste Abschnitt 106a kann einen zylinderförmigen Grundkörper aufweisen. Die unterschiedliche Form des ersten Abschnitts 106a und des zweiten Abschnitts 106b kann das Einführen des Gebindes in den Spalt 102s erleichtern.

Der erste Abschnitt 106a kann ferner einen Deckel 106d aufweisen, welche abgenommen den Hohlraum 106h freilegt. Der Deckel 106d erleichtert den Zugang zum Inneren des Brechkörpers 106. Der Deckel 106d kann das Innere des Brechkörpers 106 beispielsweise staubdicht und/oder luftdicht verschließen.

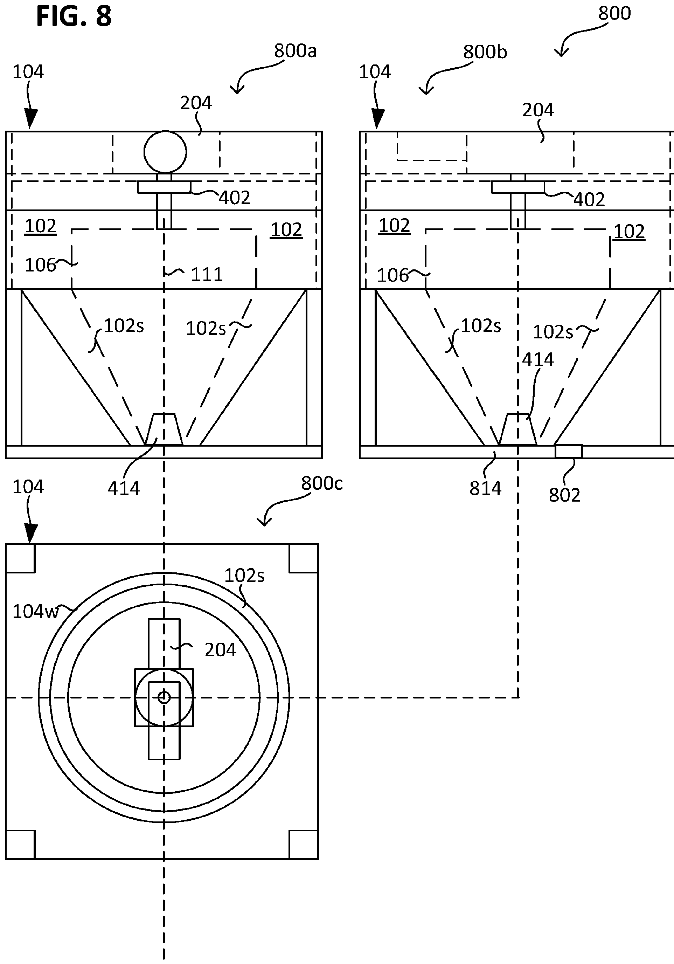

**Fig.8** veranschaulicht ein Brechwerk 800 gemäß verschiedenen Ausführungsformen in mehreren schematischen Seitenansichten 800a, 800b und einer Draufsicht 800c, z.B. eines der Brechwerke 100 bis 700. Am Ausgang 814 des Brechkanals 102 (auch als Kanalausgang 814 oder vereinfacht als Trichterausgang bezeichnet) kann zumindest ein Sensor 802 angeordnet sein, welcher eingerichtet ist, ein Material (z.B. ein Bruchstück), welche sich durch den Kanalausgang 814 hindurch bewegt, zu erfassen. Der zumindest eine Sensor 802 kann beispielsweise eine Lichtschranke (z.B. eine Flächenlichtschranke), einen Ultraschallsensor oder eine Schwerkraftklappe aufweisen oder daraus gebildet sein. Der zumindest eine Sensor 802 kann beispielsweise von einer Steuervorrichtung ausgelesen werden, welche basierend auf dem erfassten Material ermittelt, ob ein Betrugsversuch vorliegt. Alternativ oder zusätzlich kann mittels des Sensors 802 die Menge und/oder die Art des erfassten Materials ermittelt werden. Wird ermittelt, dass ein Betrugsversuch vorliegt, kann die Steuervorrichtung beispielsweise einen Alarm ausgeben.

Alternativ oder zusätzlich zu dem zumindest einem Sensor 802 kann am Kanalausgang 814 eine Entwertungsvorrichtung 802 angeordnet sein, welche eingerichtet ist, eine elektronische Wertmarke des Gebindes zu entwerten. Die Wertmarke kann beispielsweise ein Funketikett aufweisen oder daraus gebildet sein. Die Entwertungsvorrichtung 802 kann beispielsweise eingerichtet sein, einen elektromagnetischen Puls zu emittieren, welcher die Wertmarke überlastet.

Die untere Kegellagerung 414 kann beispielsweise ein Kegelrollenlager 414 aufweisen oder daraus gebildet sein. Alternativ oder zusätzlich kann die untere Kegellagerung 414 ein Kugelgelenk 414 aufweisen oder daraus gebildet sein. Es kann aber auch ein anderes Gelenk verwendet werden, welches zumindest einen Rotationsfreiheitsgrad und/oder zumindest eine Präzession des Brechkörpers 106 bereitstellt.

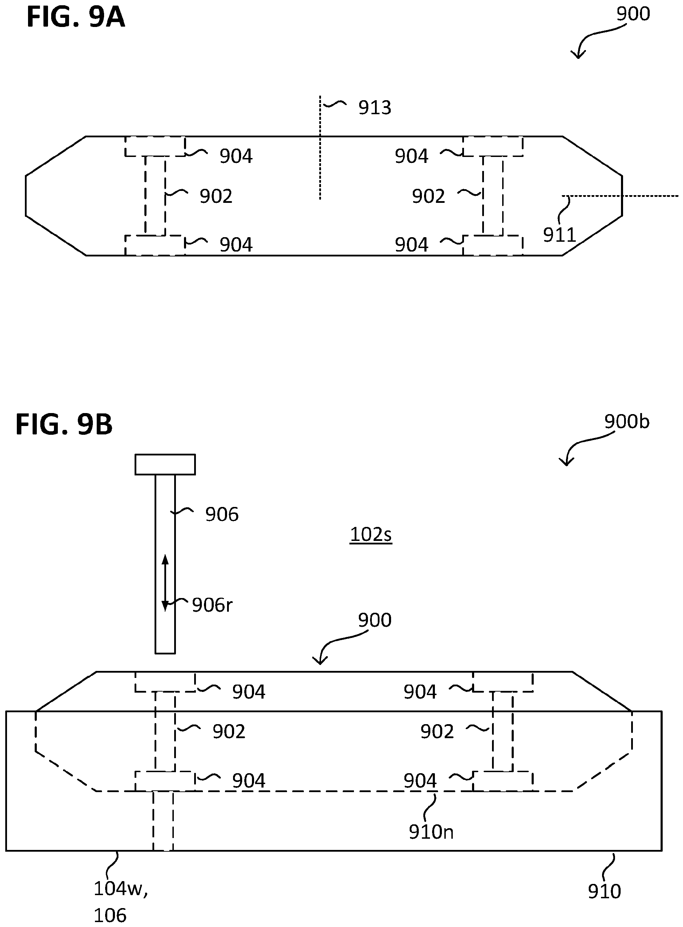

**Fig.9A** veranschaulicht eine Brechrippe 900 gemäß verschiedenen Ausführungsformen in zwei schematischen Seitenansicht und **Fig.9B** im eingebauten Zustand in einem der Brechwerke 100 bis 800.

Mehrere (z.B. zwei oder mehr, z.B. 3, 5, 10 oder mehr) solcher Brechrippen 900 können an einem Wandelement 910 des Brechkörpers 106 (z.B. dessen zweitem Abschnitt 106b) und/oder an der Brechwand 104w befestigt sein. Jede der Brechrippen 900 kann in einer Nut 910n des Wandelements 910 aufgenommen sein. Das Wandelement 910 kann beispielsweise Teil der Brechwand 104w bzw. Teil des Grundkörpers des Brechkörpers 106 sein.

Eine Brechrippe 900 kann von mehreren Durchgangsöffnungen 902 durchdrungen (entlang einer Montagerichtung 906r) sein, welche auf einander gegenüberliegenden Seiten der Brechrippe 900 verbreitert 904 sind. Die Verbreiterung 904 (auch als Vertiefung 904 bezeichnet) kann einen Schraubenkopf einer Schraube 906 aufnehmen, die zum Befestigen durch die Durchgangsöffnung 902 hindurch mit dem Wandelement 910 verbunden ist. Die somit versenkte Schraube 906 ist besser geschützt. Die somit versenkte Schraube 906 ist besser geschützt. Die Schraube 906 kann allerdings auch von einer der Brechrippe 900 bzw. dem Spalt 102 gegenüberliegenden Seite des Wandelements 910 aus in die Brechrippe 900 eingeschraubt werden. Die so angeordnet ist ebenfalls besser geschützt. Dazu kann beispielsweise der Deckel 106d des Brechkörpers 106 geöffnet werden, um die Schraube 906 einzuschrauben.

Die formschlüssige Aufnahme der Brechrippe 900 in der Nut 910n verringert die Kräfte auf die Schraube 906.

Die Brechrippe 900 kann bezüglich einer ersten Symmetrieachse 911 drehsymmetrisch und/oder bezüglich einer ersten Symmetrieebene 911 spiegelsymmetrisch eingerichtet sein. Die erste Symmetrieachse 911 bzw. Symmetrieebene 911 kann entlang der Längserstreckung der Brechrippe 900 verlaufen und/oder quer zu der Montagerichtung 906r. Dies ermöglicht es, die Standzeit zu vergrößern, indem die Brechrippe 900, wenn diese einen gewissen Abnutzungsgrad erreicht hat, um die erste Symmetrieachse 911 herum gewendet und deren abgenutzte Seite in der Nut angeordnet wird.

Die Brechrippe 900 kann bezüglich einer zweiten Symmetrieachse 913 drehsymmetrisch und/oder bezüglich einer zweiten Symmetrieebene 913 spiegelsymmetrisch eingerichtet sein. Die zweite Symmetrieachse 913 bzw. Symmetrieebene 913 kann quer zu der Längserstreckung der Brechrippe 900 verlaufen und/oder entlang der Montagerichtung 906r. Dies ermöglicht es, die Standzeit weiter zu vergrößern, indem die Brechrippe 900, wenn diese einen gewissen Abnutzungsgrad erreicht hat, um die zweite Symmetrieachse 913 herum gewendet und mit ihren abgeschrägten Endabschnitten vertauscht wieder montiert wird.

Die erste Symmetrieachse 911 bzw. Symmetrieebene 911 und die zweite Symmetrieachse 913 bzw. Symmetrieebene 913 können quer zueinander sein. Als Drehsymmetrie kann verstanden werden, dass die Brechrippe 900 bei einer Drehung der Brechrippe 900 um 180° um die Symmetrieachse herum in sich selbst übergeht. Als Spiegelsymmetrie kann verstanden werden, dass die Brechrippe 900 bei Spiegelung an der Symmetrieebene in sich selbst übergeht.

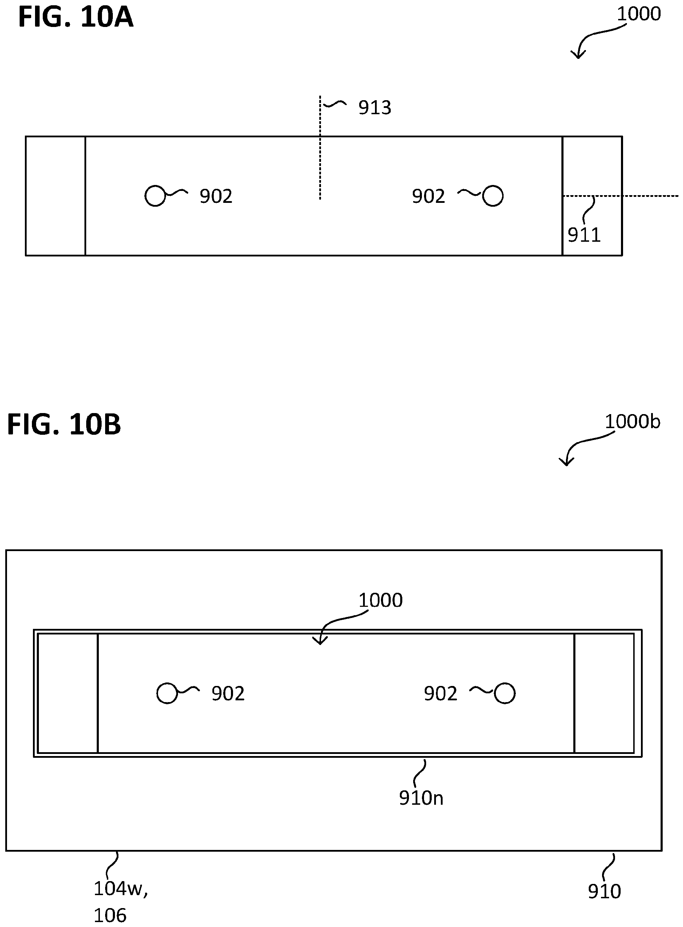

**Fig.10A** veranschaulicht eine Brechrippe 1000 gemäß verschiedenen Ausführungsformen in einer schematischen Draufsicht und **Fig.10B** im eingebauten Zustand in einem der Brechwerke 100 bis 800 mit Blich auf das Wandelement 910.

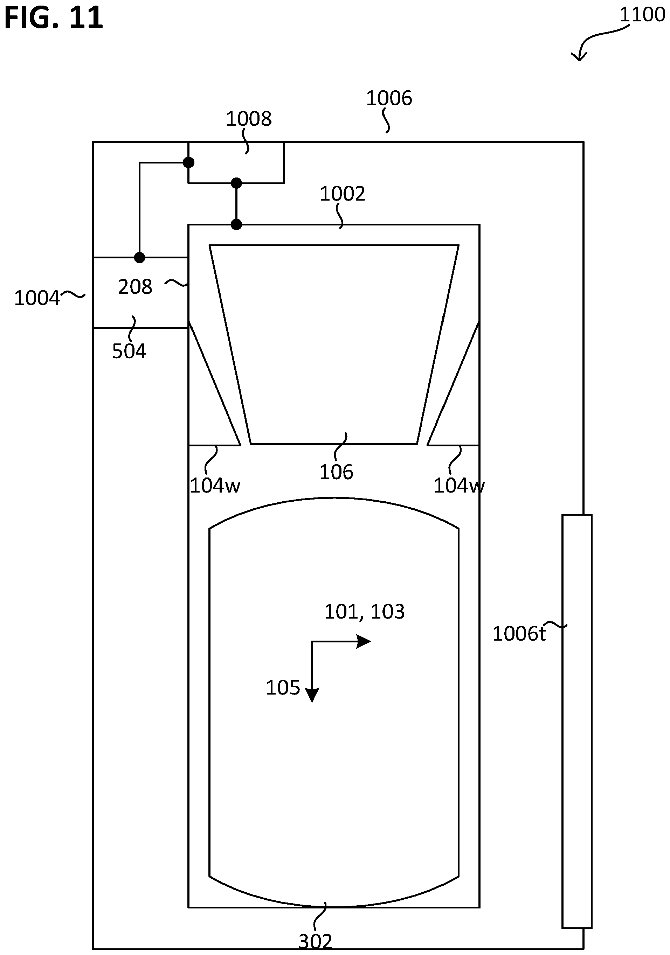

**Fig.11** veranschaulicht einen Leergutrücknahmeautomat 1100 gemäß verschiedenen Ausführungsformen einer schematischen Seitenansicht oder Querschnittsansicht mit einem Brechwerk 1002, das beispielsweise eingerichtet ist wie eines der Brechwerke 100 bis 800.

Der Leergutrücknahmeautomat 1100 kann ein Gehäuse 1006 aufweisen, welches eine Tür 1006t und eine Eingabeöffnung 1004 aufweist. Das Gehäuse 1006 umgibt das Brechwerk 1002. Der Innenraum des Gehäuses 1006, z.B. der Behälter-Aufnahmeraum 302 darin, ist an der Hinterseite durch die Tür 1006t zugänglich, welche z.B. schwenkbar gelagert ist. Die Zuführvorrichtung 504 kann zwischen der Eingabeöffnung 1004 und der Einlassöffnung 208 angeordnet sein. Die Eingabeöffnung 1004 kann derart eingerichtet sein, dass ein durch die Eingabeöffnung 1004 hindurch geführtes Leergut mittels der Zuführvorrichtung 504 in den Spalt 102s hinein transportiert wird.

Der Leergutrücknahmeautomat 1100 kann ferner zumindest einen Sensor aufweisen, der eingerichtet ist, das in die Eingabeöffnung 1004 eingelegte Leergut zu erfassen. Der Leergutrücknahmeautomat 1100 kann ferner eine Steuervorrichtung 1008 aufweisen, welche eingerichtet ist, das Brechwerk 1002 anzusteuern, z.B. in Drehung zu versetzen, wenn in der Eingabeöffnung 1004 Leergut erfasst wurde. Die Steuervorrichtung 1008 kann optional eingerichtet sein, mittels des Sensors das Leergut (z.B. auf Grundlage eines erfassten Merkmals des Leerguts) zu klassifizieren. Auf Grundlage der Klassifizierung kann das Leergut optional auch zurückgewiesen werden und/oder diesem ein finanzieller Wert zugeordnet werden, welcher dem Nutzer, der das Leergut zuführt, gut geschrieben wird. Der Sensor kann beispielsweise einen Barcodescanner aufweisen oder daraus gebildet sein. Auf diese Art kann der Leerguttyp ermittelt werden.

Die Tür 1006t kann derart eingerichtet sein, dass ein in dem Behälter-Aufnahmeraum 302 angeordneter Behälter durch die Tür 1006t hindurch transportiert werden kann.

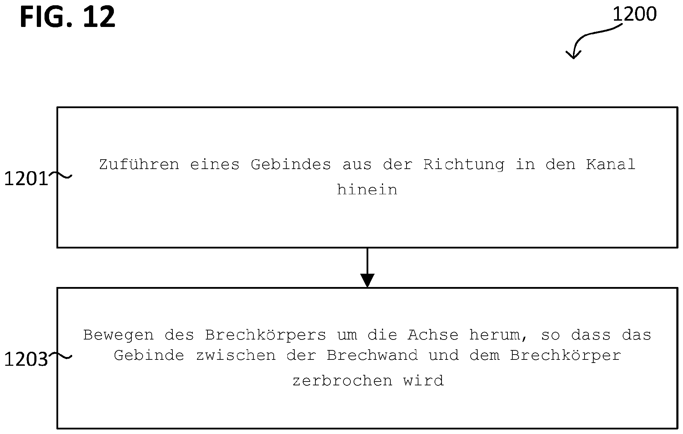

**Fig.12** veranschaulicht ein Verfahren 1200 zum Betreiben eines der Brechwerke 100 bis 800 gemäß verschiedenen Ausführungsformen in einem schematischen Ablaufdiagramm.

Das Verfahren 1200 Kann in aufweisen: in 1201, Zuführen eines Gebindes aus der Richtung in den Kanal hinein; und in 1203, Bewegen des Brechkörpers um die Antriebsachse herum, so dass das Gebinde zwischen der Brechwand und dem Brechkörper zerbrochen wird. Das Zuführen 1201 kann beispielsweise aus einer Richtung erfolgen, die parallel zu der Antriebsachse ist (auch vertikales Zuführen als bezeichnet) oder, die quer zu der Achse ist (auch als seitliches Zuführen bezeichnet). Beim Bewegen 1203 des Brechkörpers um die Antriebsachse herum kann optional eine Drehung des Brechkörpers angeregt werden um eine Drehachse herum, wobei die Drehachse die Antriebsachse umkreist (auch als Präzession bezeichnet) und/oder schräg zu der Antriebsachse ist. Die Antriebsachse und die Drehachse können sich in der unteren Lageranordnung schneiden.

## Patentansprüche

1. Brechwerk (100 bis 800), aufweisend:
• ein Gestell (104), welches einen Kanal (102) aufweist, wobei sich der Kanal (102) entlang einer Richtung (105) verengt;
• einen Brechkörper (106), welcher mittels des Gestells (104) in dem Kanal (102) gehalten ist,
• wobei der Brechkörper (106) um eine Achse (111) herum bewegbar gelagert ist, wobei die Achse (111) entlang der Richtung verläuft;
• wobei der Brechkörper (106) sich entlang der Richtung (105) verjüngt; und
• wobei zwischen dem Brechkörper (106) und einer Brechwand (104w), welche den Kanal (102) begrenzt, ein Spalt (102s) gebildet ist, welcher sich entlang der Richtung verengt,
**dadurch gekennzeichnet, dass** der Brechkörper (106) exzentrisch gelagert ist, so dass dieser die Achse (111) umkreist.

2. Brechwerk (100 bis 800) gemäß Anspruch 1,
wobei der Brechkörper (106) und/oder die Brechwand (104w) eine Vielzahl von Brechrippen (900) aufweisen,
wobei vorzugsweise jede der Brechrippen (900) von einer dem Spalt (102s) abgewandten Seite aus befestigt ist, und/oder wobei vorzugsweise jede der Brechrippen eine Symmetrie (911, 913) aufweist.

3. Brechwerk (100 bis 800) gemäß Anspruch 1 oder 2,
wobei der Brechkörper (106) drehbar um eine Drehachse (211) gelagert ist, die schräg zu der Achse (111) ist.

4. Brechwerk (100 bis 800) gemäß einem der Ansprüche 1 bis 3,
wobei der Kanal (102) in eine zusätzliche Richtung geöffnet ist, wobei die zusätzliche Richtung zumindest eine Richtungskomponente aufweist oder daraus gebildet ist, die entgegen der Richtung (105) ist.

5. Brechwerk (100 bis 800) gemäß einem der Ansprüche 1 bis 4, wobei der Kanal (102) in eine zusätzliche Richtung geöffnet ist, wobei die zusätzliche Richtung (105) quer zu der Richtung ist.

6. Brechwerk (100 bis 800) gemäß einem der Ansprüche 1 bis 5, wobei die Richtung (105) entlang einer Gravitationsrichtung ist.

7. Brechwerk (100 bis 800) gemäß einem der Ansprüche 1 bis 6, ferner aufweisend:
eine Zuführvorrichtung (504), welche eingerichtet ist, dem Kanal (102) ein Gebinde zuzuführen.

8. Brechwerk (100 bis 800) gemäß einem der Ansprüche 1 bis 7, ferner aufweisend:
eine Vielzahl von Borsten (602), welche in dem Kanal (102) angeordnet ist.

9. Brechwerk (100 bis 800) gemäß einem der Ansprüche 1 bis 8, wobei der Brechkörper (106) mittels eines Kugellagers gelagert ist.

10. Brechwerk (100 bis 800) gemäß einem der Ansprüche 1 bis 9, wobei der Brechkörper (106) einen Hohlkörper aufweist.

11. Brechwerk (100 bis 800) gemäß einem der Ansprüche 1 bis 10, wobei der Brechkörper (106) mit einem granularen Füllmaterial gefüllt ist.

12. Brechwerk (100 bis 800) gemäß einem der Ansprüche 1 bis 11, wobei der Brechkörper (106) auf einer ersten Seite, auf welche die Richtung gerichtet ist, einen ersten Abschnitt (106a) aufweist, welcher zylinderförmig ist; und/oder wobei die Brechwand (104w) einen trichterförmigen Grundkörper aufweist.

13. Brechwerk (100 bis 800) gemäß einem der Ansprüche 1 bis 12, wobei der Brechkörper (106) auf einer zweiten Seite, von welcher die Richtung weg gerichtet ist, einen zweiten Abschnitt (106b) aufweist, welcher sich entlang der Richtung verjüngt und den Spalt (102s) begrenzt,
wobei vorzugsweise der zweiten Abschnitt (106b) einen kegelstumpfförmigen Grundkörper aufweist.

14. Leergutrücknahmeautomat (1100), der das Brechwerk (100 bis 800) gemäß einem der Ansprüche 1 bis 13 aufweist.

15. Verfahren (1200) zum Betreiben des Brechwerks gemäß einem der Ansprüche 1 bis 13 das Verfahren aufweisend: Zuführen (1201) eines Gebindes in den Kanal (102) hinein; Bewegen (1203) des Brechkörpers (106) um die Achse (111) herum, so dass das Gebinde zwischen der Brechwand und dem Brechkörper (106) zerbrochen wird.

## Claims

1. Crusher (100 to 800), comprising:
• a frame (104) which has a channel (102), the channel (102) narrowing along one direction (105);
• a crushing body (106) which is held in the channel (102) by means of the frame (104),
• the crushing body (106) being mounted such that it can be moved around an axis (111), the axis (111) running along the direction;
• the crushing body (106) narrowing along the direction (105); and
• a gap (102s) which narrows along the direction being formed between the crushing body (106) and a crushing wall (104w) which delimits the channel (102),
**characterized in that** the crushing body (106) is mounted eccentrically, with the result that it orbits the axis (111).

2. Crusher (100 to 800) according to Claim 1, the crushing body (106) and/or the crushing wall (104w) comprising a multiplicity of crushing ribs (900), each of the crushing ribs (900) preferably being fastened from a side which faces away from the gap (102s), and/or each of the crushing ribs preferably having a symmetry (911, 913).

3. Crusher (100 to 800) according to Claim 1 or 2, the crusher (106) being mounted such that it can be rotated about a rotational axis (211) which is oblique with respect to the axis (111).

4. Crusher (100 to 800) according to one of Claims 1 to 3,
the channel (102) being open in an additional direction, the additional direction having at least one directional component, or being formed therefrom, which is counter to the direction (105).

5. Crusher (100 to 800) according to one of Claims 1 to 4,
the channel (102) being open in an additional direction, the additional direction (105) being transverse with respect to the direction.

6. Crusher (100 to 800) according to one of Claims 1 to 5,
the direction (105) being along the direction of gravity.

7. Crusher (100 to 800) according to one of Claims 1 to 6,
comprising, furthermore:
a feed apparatus (504) which is configured to feed a container to the channel (102).

8. Crusher (100 to 800) according to one of Claims 1 to 7,
comprising, furthermore:
a multiplicity of bristles (602) which are arranged in the channel (102).

9. Crusher (100 to 800) according to one of Claims 1 to 8,
the crushing body (106) being mounted by means of a ball bearing.

10. Crusher (100 to 800) according to one of Claims 1 to 9,
the crushing body (106) comprising a hollow body.

11. Crusher (100 to 800) according to one of Claims 1 to 10,
the crushing body (106) being filled with a granular filling material.

12. Crusher (100 to 800) according to one of Claims 1 to 11,
the crushing body (106) having, on a first side, towards which the direction is directed, a first section (106a) which is cylindrical; and/or
the crushing wall (104w) comprising a funnel-shaped main body.

13. Crusher (100 to 800) according to one of Claims 1 to 12,
the crushing body (106) having, on a second side, away from which the direction is directed, a second section (106b) which narrows along the direction and delimits the gap (102s),
the second section (106b) preferably comprising a frustoconical body.

14. Reverse vending solution machine (1100) which comprises the crusher (100 to 800) according to one of Claims 1 to 13.

15. Method (1200) for operating the crusher according to one of Claims 1 to 13, the method comprising:
feeding (1201) of a container into the channel (102);
moving (1203) of the crushing body (106) around the axis (111), with the result that the container is broken up between the crushing wall and the crushing body (106).

## Revendications

1. Broyeur (100 à 800), comprenant :
- un châssis (104), qui présente un canal (102), le canal (102) se rétrécissant le long d'une direction (105) ;
- un corps de broyage (106), qui est maintenu dans le canal (102) au moyen du châssis (104),
- le corps de broyage (106) étant monté de manière mobile autour d'un axe (111), l'axe (111) s'étendant le long de la direction ;
- le corps de broyage (106) s'effilant le long de la direction (105) ; et
- un espace (102s) étant formé entre le corps de broyage (106) et une paroi de broyage (104w) qui délimite le canal (102), qui se rétrécit le long de la direction (105),
**caractérisé en ce que** le corps de broyage (106) est monté de manière excentrique, de telle sorte que celui-ci tourne autour de l'axe (111).

2. Broyeur (100 à 800) selon la revendication 1, dans lequel le corps de broyage (106) et/ou la paroi de broyage (104w) présentent une pluralité de nervures de broyage (900),
dans lequel de préférence chacune des nervures de broyage (900) est fixée à partir d'un côté détourné de l'espace (102s), et/ou
dans lequel de préférence chacune des nervures de broyage présente une symétrie (911, 913).

3. Broyeur (100 à 800) selon la revendication 1 ou 2, dans lequel le corps de broyage (106) est monté de manière rotative autour d'un axe de rotation (211), qui est oblique par rapport à l'axe (111).

4. Broyeur (100 à 800) selon l'une quelconque des revendications 1 à 3, dans lequel le canal (102) est ouvert dans une direction supplémentaire, la direction supplémentaire présentant ou étant formée par au moins une composante directionnelle qui est opposée à la direction (105).

5. Broyeur (100 à 800) selon l'une quelconque des revendications 1 à 4, dans lequel le canal (102) est ouvert dans une direction supplémentaire, la direction supplémentaire (105) étant transversale à la direction.

6. Broyeur (100 à 800) selon l'une quelconque des revendications 1 à 5, dans lequel la direction (105) est le long d'une direction de gravitation.

7. Broyeur (100 à 800) selon l'une quelconque des revendications 1 à 6, comprenant en outre :
un dispositif d'alimentation (504), qui est adapté pour alimenter le canal (102) avec un emballage.

8. Broyeur (100 à 800) selon l'une quelconque des revendications 1 à 7, comprenant en outre :
une pluralité de poils (602), qui sont agencés dans le canal (102).

9. Broyeur (100 à 800) selon l'une quelconque des revendications 1 à 8, dans lequel le corps de broyage (106) est monté au moyen d'un roulement à billes.

10. Broyeur (100 à 800) selon l'une quelconque des revendications 1 à 9, dans lequel le corps de broyage (106) présente un corps creux.

11. Broyeur (100 à 800) selon l'une quelconque des revendications 1 à 10, dans lequel le corps de broyage (106) est rempli d'un matériau de remplissage granulaire.

12. Broyeur (100 à 800) selon l'une quelconque des revendications 1 à 11, dans lequel le corps de broyage (106) présente, sur un premier côté vers lequel la direction est dirigée, une première section (106a) qui est cylindrique ; et/ou dans lequel la paroi de broyage (104w) présente un corps de base en forme d'entonnoir.

13. Broyeur (100 à 800) selon l'une quelconque des revendications 1 à 12, dans lequel le corps de broyage (106) présente, sur un deuxième côté à l'opposé duquel la direction est dirigée, une deuxième section (106b), qui s'effile le long de la direction et délimite la fente (102s),
dans lequel de préférence la deuxième section (106b) présente un corps de base tronconique.

14. Automate de reprise d'emballages vides (1100), qui présente le broyeur (100 à 800) selon l'une quelconque des revendications 1 à 13.

15. Procédé (1200) d'exploitation du broyeur selon l'une quelconque des revendications 1 à 13, le procédé comprenant :
l'introduction (1201) d'un emballage dans le canal (102) ;
le déplacement (1203) du corps de broyage (106) autour de l'axe (111) de telle sorte que l'emballage est broyé entre la paroi de broyage et le corps de broyage (106).
